# EUROPEAN PATENT APPLICATION

(11) **EP 4 421 048 A1**
(43) Date of publication of application: **28.08.2024**
(21) Application number: 23158492.1
(22) Date of filing: 24.02.2023
(51) Int. Cl.: C04B 28/04, C04B 24/26, C04B 18/12

(54) **BACKFILL MATERIAL**

(71) Applicant: Construction Research & Technology GmbH, 83308 Trostberg (DE)
(72) Inventor: DHERS, Sebastien, 83308 Trostberg (DE); FREIMUT, Dominik, 83308 Trostberg (DE); WELDERT, Kai-Steffen, 83308 Trostberg (DE); GUGGENBERGER, Rebecca, 83308 Trostberg (DE); MARTIC, Zlatko, 83308 Trostberg (DE)
(74) Representative: Lorenz, Klaus Uwe

(57) **Abstract**

A backfill material useful in mining and tunneling applications comprises a) tailings, b) a binder component, c) water, and d) at least one dispersant selected from polycarboxylate ethers and polycarboxylic acids. The binder component comprises a Portland cement clinker-based binder and calcined clay. By the partial substitution of Portland cement clinker-based binder by calcined clay, the backfill material has a reduced carbon footprint. The yield point of the material and the compressive strength of the formed backfill are not compromised.

## Description

The invention relates to a backfill material useful in a variety of mining and tunneling applications.

A backfill material is used to fill excavations in mining, as in "cut and fill" mining, in general steep dipping ore bodies or in wide horizontal bodies where the fill is used as the means of creating a floor and a sidewall pillar support. For example, an elongated excavation extending longitudinally along the strike of the ore body is driven upwardly or downwardly following the deposit. To provide support for the hanging wall, pillars are left in place. Later the space between adjacent pillars may be filled by a backfill to support the roof so allowing the pillars to be removed for the ore therein to be extracted.

Mined-out portions of stopes are often backfilled with an aqueous slurry of tailings from the crushing and processing of mineral ore, pumped into the stope. The tailings may be for example reduction works tailings, mill tailing sands, and coal dust tailings. The tailings are usually made of fine particles of less than 150 micron, the majority below 75 micron.

Usually, the slurry is pumped for a distance of several kilometers from where the slurry is prepared. In order to make the slurry pumpable it is necessary to add a high proportion of water and/or a plasticiser to exert a plasticising effect on the solids of the slurry.

It has been proposed to add ordinary Portland Cement to the slurry in order to improve resistance of the backfill to compression and offer improved strength.

WO 2022/117528 A1 relates to a process for the production of backfilling pastes for underground operations, said process comprising or essentially consisting of the mixing of a) cement, b) tailings from underground operations, c) optionally extra water, d) at least one polycarboxylate ether, and e) calcium hydroxide. The invention also relates to a method for controlling the flow of a backfilling paste for underground operations.

Portland cement is made primarily from certain clay minerals, limestone and gypsum, in a high temperature process that drives off carbon dioxide and chemically combines the primary ingredients into new compounds. Because carbon dioxide is generated by both the cement production process itself, as well as by energy plants that generate power to run the production process, cement production is currently a leading source of current carbon dioxide atmospheric emissions.

As global warming and ocean acidification become an increasing problem and the desire to reduce carbon dioxide gas emissions (a principal cause of global warming) continues, the cement production industry will fall under increased scrutiny. Moreover, cement plants produce other pollutants like NOx, SOx, VOCs, particulates and mercury. Cement plants also produce cement kiln dust, which must sometimes be land filled, often in hazardous materials landfill sites.

It is desirable to provide a backfill material with reduced carbon footprint without compromising critical properties.

Substitution of part of the ordinary Portland Cement, together with the uncontrolled nature of the tailings however means that the behavior of a backfill material is difficult to predict. Solutions that work reliably in other technical areas do not necessarily lead to the desired results in backfill operations.

It is an object of the invention to provide a backfill material with reduced carbon footprint without compromising critical properties such as yield strength so that the backfill material can be pumped also over a long distance, and strength of the formed backfill.

The present invention therefore provides a backfill material comprising a binder component, tailings and a dispersant that ensures sufficient workability and open time.

The above problem is solved by a backfill material comprising
a. tailings,
b. a binder component,
c. water,
d. and at least one dispersant selected from polycarboxylate ether and polycarboxylic acid wherein the binder component comprises a Portland cement clinker-based binder and calcined clay.

The term backfilling material refers to a reinforcing material useful in underground operations to fill any voids, which has a flowable or pumpable consistency under standard conditions. Voids may originate from the excavation process in underground operations or they may occur naturally, for example as caves. The backfilling material is a settable material, which hardens with time to form a solid material providing resistance to compression. Especially, the hardening of backfilling material occurs via a hydration mechanism of the binder component.

The backfill material is transported through pipelines to underground voids, where the backfill material gradually solidifies and develops strength. The hardened backfill provides support to the nearby rocks, reduces surface subsidence, and improves ore recovery. The fluidity plays a crucial role for backfilling as the backfill material needs to be pumpable to be transported to the target space as mentioned before.

The backfill material is generally considered adequate for use in subterranean operations and sufficiently pumpable when it exhibits a yield point ("YP") of 1000 Pa or lower, preferably 900 Pa, more preferred 800 Pa, as measured by constant shear rate method (at 0.5 RPM) using a HAAKE viscotester iQ rheometer and measuring geometry with VANE (FL100). The yield point of a backfill material can be used to gain information about the fluidity of a backfill material. The yield point is the lowest shear-stress value above which a material will behave like a fluid, and below which the material will act like a solid. It is often seen at start-up of rakes, mixers and pumps, when a higher than usual energy is required to begin rotation. This peak in energy required is due to the yield point, which causes the material to display solid-like properties until the yield point has been exceeded. Once the yield point has been overcome, the material behaves like a liquid and will start to flow.

The backfill material can be in form of a slurry or in form of a paste. A slurry is intended to mean any flowable suspension of fine particles in a liquid with an excess of liquid that can segregate as a supernatant. A paste is intended to mean a homogenous mixture of fine particles and liquid that is substantially stable against segregation and bleeding.

Tailings within the present context are the by-product of mining operations after extraction of the valuable materials from the ore in a processing plant or mill using beneficiation techniques such as flotation.

Fine grinding of the ore, e.g. copper, gold, zinc/lead, nickel, platinum group metals, etc., is required to liberate the values from the containing gangue, to selectively float the values in a froth flotation cell. For copper, this size range is typically a p80 of between 100 and 200 micron. Consequently, all the gangue materials associated with the valuable mineral are comminuted to a similar size. The resultant tailings may be stored as a thickened slurry or paste in a purpose built tailings storage facility. Ponds can be used for long term storage, as a place to allow the different components of the tailings to settle out of suspension, or for temporary holding until the tailings can be further processed. When the mine tailings source includes a settling pond, a dredging device may be utilized to remove mine tailings from the settling pond as dredged mine tailings, which also may be referred to as mature fine tailings, and the mine tailings supplied to the mixing volume may include the dredged mine tailings.

Tailings can vary in chemical composition and physical appearance in a wide range. Generally, the chemical composition will largely depend on the location and chemical composition of the deposit from where the tailings were extracted. Furthermore, the chemical composition may also be influenced by the extraction methods as well as subsequent storage time and conditions. The physical appearance, including particle size and shape, typically also depends on the mechanical treatment of the ore and the tailings. The tailings can either be used directly after extraction of the valuable materials from the ore for use in the backfill material or they can be stored in tailings ponds that serve as temporary storage facilities for tailings.

Mostly, the tailings are a mix of silt (<75 micron), fine sand (75-150 micron), and coarse sand (>150 micron). The tailings are usually made of fine particles, at least 90 wt.-% of which having a particle size of less than 150 micron, and at least 50 wt.-% having a particle size below 75 micron.

Tailings from underground operations can contain quartz and phyllosilicates. Other minerals such as, for example, magnetite and gypsum may additionally be present. It is, however, preferable that the amount of gypsum in such tailings is low. A low amount is an amount of less than 5 wt.-%, preferably less than 2 wt-%, more preferably less than 1 wt.-% relative to the total dry weight of the tailings. The phyllosilicates are layered silicate minerals and, more specific, phyllosilicate minerals based on tetrahedral MO₄ sheets (M = Si⁴⁺, Al³⁺) and octahedral M(O,OH)₆ sheets (M = Al³⁺, Mg²⁺, Fe^{2+/3+}, etc.). They differ inter alia from each other by their way of stacking the tetrahedral and octahedral sheets, which strongly influences their capacity of adding or losing water molecules or cations from their structure. Phyllosilicates are chosen from the list consisting of the minerals of the smectite group (such as montmorillonite, nontronite, beidellite, saponite, hectorite and sauconit), vermiculites, kaolinite, serpentines (such as serpentine and lizardite), palygorskite, sepiolite, talc, pyrophyllite, chlorites, mica (such as muscovite or biotite), interlayer-deficient mica like illite, glauconite, celadonite, and phengite.

Phyllosilicates or expansive clays have been observed to impede the performance of polycarboxylate ether type superplasticizers, which are intended to adsorb onto cement particles in order to disperse them within an aqueous slurry or paste. Expansive clays interfere with this function. In this case, the adsorbed superplasticizers can no longer act as plasticizers resulting in a construction composition of reduced flowability. Quite surprisingly, polycarboxylate ether dispersants have been found to work well in the backfill material of the present invention, possibly due to a higher water to binder ratio than that encountered in a conventional cementitious construction composition.

The backfill material of the present invention incorporates the use of a binder component comprising a Portland cement clinker-based binder and calcined clay. The use of calcined clay materials as a partial substitute of Portland cement allows for a substantial reduction in the overall carbon footprint of the backfill material at substantially the same strength achieved by conventional Portland cements.

In one embodiment, the weight ratio of the binder component to the tailings is from 1 to 20 preferably 1.5 to 15 more preferably 2 to 10.

The term "Portland cement" denotes any cement compound containing Portland clinker, especially CEM I within the meaning of standard EN 197-1, paragraph 5.2. A preferred cement is ordinary Portland cement (OPC) according to DIN EN 197-1. The phases constituting Portland cement mainly are alite (C3S), belite (C2S), calcium aluminate (C3A), calcium ferroaluminate (C4AF) and other minor phases. Commercially available OPC may either contain calcium sulfate (< 7 wt.-%) or is essentially free of calcium sulfate (< 1 wt.-%).

In one embodiment, the Portland cement clinker is present in an amount of at least 5 wt.-%, preferably in an amount of 10 wt.-% to 90 wt.-%, more preferably in an amount of 15 wt.-% to 65 wt.-%, relative to the weight of the binder component.

Clays are abundant materials worldwide. Calcined clay materials are obtained by heat treatment of clays, which contain phyllosilicates, i.e. sheet silicates. Phyllosilicates include 1:1 and/or 2:1 layered (natural) clays or mixtures thereof, comprising di- and/or trioctahedral sheets or mixtures thereof and a layer charge of 0, e.g., kaolinite, up to a negative layer charge of 1, e.g. mica or mixtures thereof. Heat treatment of the clay converts the clay minerals by dehydroxylation with release of water. For example, kaolinite may be heat treated to obtain metakaolin (Al₂Si₂O₇). The obtained calcined clay material is a naturally derived pozzolan. Clays derived from natural deposits to prepare calcined clays can vary in composition and crystalline structure in a broad range. For the purpose of the present invention, a calcined clay is any material prepared by heat treatment of clay that provides a pozzolanic reactivity. As the composition, crystalline structure, fineness and the processing conditions like temperature and time of heat applied can vary significantly, the reactivity of calcined clays consequently can differ significantly as well.

Suitable clay materials have been found to belong to the kaolin group such as kaolinite, dickite, nacrite or halloysite. Acceptable strengths can also be obtained using clays of the smectite group including dioctahedral smectites such as montmorillonite and nontronite and trioctahedral smectites such as saponite, or vermiculite, and mixtures thereof. This opens the possibility of using clays which are much more widely available than kaolin.

These may be medium- or low-grade kaolin clays or non-kaolin clays. The calcined clay material may comprise less than 90 wt.-%, preferably less than 70 wt.-%, for example 30-40 wt.-% of calcined clay obtained from kaolin.

In one embodiment, the calcined clay is present in an amount of at least 5 wt.-%, preferably in an amount of at 10 wt.-% to 80 wt.-%, more preferably in an amount of 15 wt.-% to 60 wt.-%, relative to the weight of the binder component.

According to another embodiment, the binder component additionally comprises at least one of carbonate rock powder and a sulfate source.

A coupled substitution of cement with calcined clay and carbonate rock powder allows still higher levels of substitution. The idea of coupled substitution of cement with calcined clay and carbonate rock powder is based on the observation that cements containing alumina react with carbonate phases to produce carboaluminate phases that are hard and crystalline, and contribute to the development of the microstructure.

Carbonate rock powders consist of finely crushed carbonate rock and are abundantly available. Useful examples include limestone, such as ground limestone or precipitated limestone, dolomite, magnesite, and mixtures thereof. Preferably, the carbonate rock powder is limestone.

To prevent undersulfation and to optimize early-age strength, the sulfate content may need to be adjusted in calcined clay blends. An adequate sulfate content can be obtained by adding a sulfate source to the blends. The sulfate source is a compound capable of providing sulfate ions in an alkaline aqueous environment. Generally, the sulfate source has an aqueous solubility of at least 0.6 mmol·L⁻¹ at a temperature of 30° C. The aqueous solubility of the sulfate source is suitably determined in water with a starting pH value of 7. The sulfate source may be a calcium sulfate source and the sulfate source is preferably selected from gypsum, hemihydrate, anhydrite and mixtures thereof.

In one embodiment, the binder component additionally comprises a supplementary cementitious material other than calcined clay, preferably a supplementary cementitious material selected from slag, fly ash and natural pozzolans. The slag can be either metallurgical slag, which is the solid waste produced by the metallurgical industry, such as steel slag, blast furnace slag (BFS), ground granulated blast furnace slag (GGBFS), red mud (RM), and copper slag (CS), or else synthetic slag. Fly ash is produced inter alia during the combustion of coal in power stations. Class C fly ash (brown-coal fly ash) comprises according to WO 08/012438 about 10% by weight of CaO, whereas class F fly ash (hard-coal fly ash) comprises less than 8% by weight, preferably less than 4% by weight, and typically about 2% by weight of CaO. The natural pozzolans can be tuff, trass or volcanic ash.

As a further essential ingredient, the backfill material of the invention comprises a dispersant selected from polycarboxylate ethers, polycarboxylic acids and mixtures thereof.

It is known that dispersants are added to aqueous slurries of hydraulic and/or mineral binders for improving their workability. Additives of this kind are able to prevent the agglomeration by dispersing existing particles and those newly formed by hydration, and in this way to improve the workability (fluidity, pumpability, viscosity, self-compacting ability, spray ability, finish ability). In order to reduce the fraction of excess water for a given processing consistency and/or to improve the processing properties for a given water/binder ratio, additives are used which are generally referred to as water-reducing agents or plasticizers. Those which allow high levels of water reduction are known as high range water reducers or superplasticizers. Polycarboxylate ether type superplasticizers (PCEs) based on carboxyl-containing monomers and on polyethylene glycol-containing olefinic monomers are known per se.

The polycarboxylate ether (PCE) is in particular a comb polymer having a carbon-containing backbone to which are attached pendant cement-anchoring groups and polyether side chains, wherein the polyether side chains are preferably linked to the polycarboxylate backbone via ester, ether and/or amide groups. The anionic groups are carboxylic groups and/or carboxylate groups. The PCE is preferably obtainable by radical copolymerization of a polyether macromonomer and a monomer comprising an anionic group. Polycarboxylate ethers are commercially available.

Generally, the polycarboxylate ether incorporates structural units (I) comprising anionic and/or anionogenic groups, and structural units (II) comprising a polyether side chain.

Preferably, the structural unit comprising anionic and/or anionogenic groups is one of the general formulae (Ia), (Ib) and/or (Ic): 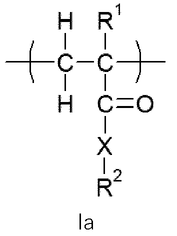 wherein
- R¹: is H, C₁-C₄ alkyl, CH₂COOH, preferably H or methyl;
- X: is a chemical bond;
- R²: isOM; 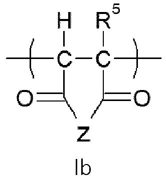
wherein
- R⁵: is H or C₁-C₄ alkyl, preferably H;
- Z: is O; 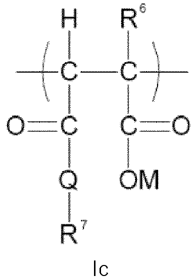
wherein
- R⁶: is H or C₁-C₄ alkyl, preferably H;
- Q: is NR⁷ or O;
- R⁷: is H, M, (Cₙ₁H₂ₙ₁)-OH, (Cₙ₁H₂ₙ₁)-PO₃M₂, (Cₙ₁H₂ₙ₁)-OPO₃M₂, (C₆H₄)-PO₃M₂, or (C₆H₄)-OPO₃M₂,
- n1: is 1, 2, 3 or 4; and
where each M independently is H or a cation equivalent.

The structural unit of the general formula (Ib) is considered to contain an anionogenic group that undergoes hydrolysis under alkaline conditions giving a structural unit of the formula (Ic) wherein Q is O and R⁷ is H or M.

Preferably, the structural unit comprising a polyether side chain is one of the general formulae (IIa), (IIb), (IIc) and/or (IId): 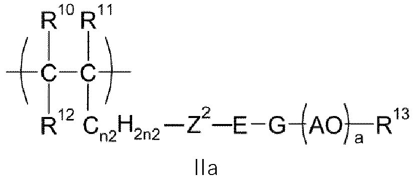 wherein
- R¹⁰,: R¹¹ and R¹² independently of one another are H or C₁-C₄ alkyl, preferably H or methyl;
- Z²: is O or S;
- E: is C₂-C₆ alkylene, cyclohexylene, CH₂-C₆H₁₀, 1,2-phenylene, 1,3-phenylene or 1,4-phenylene;
- G: is O, NH or CO-NH; or
- E and G: together are a chemical bond;
- A: is C₂-C₅ alkylene or CH₂CH(C₆H₅), preferably C₂-C₃ alkylene;
- n2: is 0, 1, 2, 3, 4 or 5;
- a: is an integer from 2 to 350, preferably 10 to 150, more preferably 20 to 100;
- R¹³: is H, an unbranched or branched C₁-C₄ alkyl group, CO-NH₂ or COCH₃; 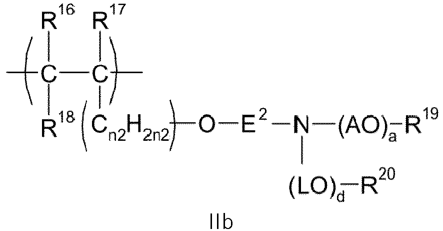
wherein
- R¹⁶, R¹⁷ and R¹⁸: independently of one another are H or C₁-C₄ alkyl, preferably H;
- E²: is C₂-C₆ alkylene, cyclohexylene, CH₂-C₆H₁₀, 1,2-phenylene, 1,3-phenylene, or 1,4-phenylene, or is a chemical bond;
- A: is C₂-C₅ alkylene or CH₂CH(C₆H₅), preferably C₂-C₃ alkylene;
- n2: is 0, 1, 2, 3, 4 or 5;
- L: is C₂-C₅ alkylene or CH₂CH(C₆H₅), preferably C₂-C₃ alkylene;
- a: is an integer from 2 to 350, preferably 10 to 150, more preferably 20 to 100;
- d: is an integer from 1 to 350, preferably 10 to 150, more preferably 20 to 100;
- R¹⁹: is H or C₁-C₄ alkyl; and
- R²⁰: is H or C₁-C₄ alkyl; 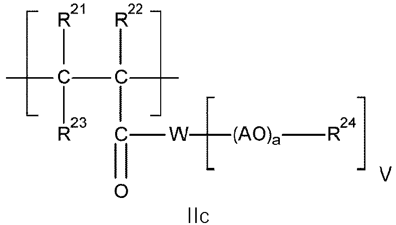
wherein
- R²¹, R²² and R²³: independently are H or C₁-C₄ alkyl, preferably H;
- W: is O, NR²⁶, or is N;
- V: is 1 if W = O or NR²⁵, and is 2 if W = N;
- A: is C₂-C₅ alkylene or CH₂CH(C₆H₅), preferably C₂-C₃ alkylene;
- a: is an integer from 2 to 350, preferably 10 to 150, more preferably 20 to 100;
- R²⁴: is H or C₁-C₄ alkyl;
- R²⁵: is H or C₁-C₄ alkyl; 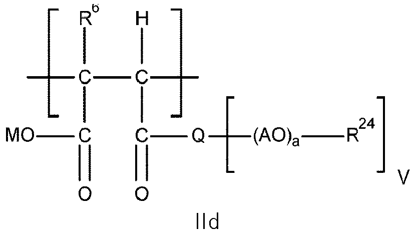
wherein
- R⁶: is H or C₁-C₄ alkyl, preferably H;
- Q: is NR¹⁰, N or O;
- V: is 1 if Q = O or NR¹⁰ and is 2 if Q = N;
- R¹⁰: is H or C₁-C₄ alkyl;
- A: is C₂-C₅ alkylene or CH₂CH(C₆H₅), preferably C₂-C₃ alkylene; and
- a: is an integer from 2 to 350, preferably 10 to 150, more preferably 20 to 100;
where each M independently is H or a cation equivalent.

The molar ratio of structural units (I) to structural units (II) varies from 1:3 to about 10:1, preferably 1:1 to 10:1, more preferably 3:1 to 6:1. The polymeric dispersants comprising structural units (I) and (II) can be prepared by conventional methods, for example by free radical polymerization or controlled radical polymerization. The preparation of the dispersants is, for example, described in EP 0 894 811, EP 1 851 256, EP 2 463 314, and EP 0 753 488.

A polymer can be characterized by its charge density. The charge density refers to the percentage of the monomers which contain charged functional groups. The charge density can affect the solubility, conformation, and electrostatic interaction, and itself is sensitive to pH.

In one embodiment, the polycarboxylate ether dispersant has a charge density of at least 0.1 meq/g, preferably 0.5 to 8 meq/g.

The polycarboxylic acid may be selected from low molecular weight polycarboxylic acids and polymeric polycarboxylic acids and salts thereof.

Suitable low molecular weight polycarboxylic acids and salts thereof have a molecular weight of, e.g., 500 g/mol or lower and include aliphatic polycarboxylic acids, such as oxalic acid, malonic acid, succinic acid, glutaric acid, adipic acid, pimelic acid, fumaric acid, maleic acid, itaconic acid, citraconic acid, mesaconic acid, malic acid, tartaric acid, and citric acid.

Suitable low molecular weight polycarboxylic acids and salts thereof further include amino carboxylic acids and salts thereof, such as ethylenediamine tetra acetic acid and nitrilotriacetic acid.

Suitable polymeric polycarboxylic acids may be selected from homopolymers and copolymers of a , *β* -ethylenically unsaturated carboxylic acids; and copolymers of at least one a , *β* -ethylenically unsaturated carboxylic acid and at least one sulfo group containing monomer; and salts thereof. The polymeric polycarboxylic acid can be employed as the free acid or in a partially or completely neutralized form, i.e., as a salt. The cation is not particularly limited and may be selected from alkali metals, such as sodium or potassium, and ammonium cations.

The molecular weight of the polymeric polycarboxylic acids is 25,000 g/mol or less, preferably the molecular weight is in the range of 1,000 to 25,000 g/mol, most preferably 1,000 to 5,000 g/mol. The molecular weight may be measured by the gel permeation chromatography method (GPC).

Effective polymeric polycarboxylic acids have a carboxylic group density within a certain range. Preferably, the milliequivalent number is 3.0 meq/g or higher, preferably 3.0 to 17.0 meq/g, more preferably 5.0 to 17.0 meq/g, most preferably 5.0 to 14.0 meq/g.

The polymeric polycarboxylic acid is selected from homopolymers and copolymers of *α*,*β-*ethylenically unsaturated carboxylic acids; and copolymers of at least one *α*,*β-*ethylenically unsaturated carboxylic acid and at least one sulfo group containing monomer. Suitable *α*,*β*-ethylenically unsaturated carboxylic acids include acrylic acid, methacrylic acid and polymaleic acid.

Suitable sulfo group containing monomers include 2-propene-1-sulfonic acid (allylsulfonic acid), 2-methyl-2-propene-1-sulfonic acid (methallylsulfonic acid), vinylsulfonic acid, styrenesulfonic acids, i.e. 2-styrenesulfonic acid, 3-styrenesulfonic acid and 4-styrenesulfonic acid, and 2-acrylamido-2-methylpropane sulfonic acid (AMPS). Preferably, the polymeric polycarboxylic acid is a homopolymer of acrylic acid, a homopolymer of methacrylic acid, a copolymer of acrylic acid and maleic acid, or a copolymer of methacrylic acid and maleic acid, most preferably a homopolymer of acrylic acid.

Examples of suitable polymeric components are commercially available from BASF SE under the trade name SOKALAN^{®}, such as SOKALAN^{®} PA 20, SOKALAN^{®} PA 15, SOKALAN^{®} CP 10S, SOKALAN^{®} PA 25 CL PN, SOKALAN^{®} CP 12S, SOKALAN^{®} PA 40. "CP" generally designates a copolymer whereas "PA" generally designates a polyacrylate.

In a preferred embodiment, the at least one dispersant is present in an amount of 0.05 wt.-% to 15 wt.-%, preferably in an amount of 0.1 wt.-% to 10 wt.-%, relative to the weight of a) and b).

Water within the context of the present invention refers to any water present in the backfill material regardless of its origin. The water in a backfill material of the present invention may originate from the cement, the tailings, the water present where aqueous solutions or dispersions of the at least one polycarboxylate ether are used, and/or any extra water added in addition. The term "extra water" relates to water added as such. In other words "extra water" is water not present in the cement, the tailings, the water present where aqueous solutions or dispersions of the at least one polycarboxylate ether are used.

If additional water is added, such water can be any water available such as distilled water, purified water, tap water, mineral water, spring water, well water, salt water, wastewater, and ground water. The use of wastewater is possible only in cases where the composition of such wastewater is known and where none of the impurities contained may impart the functionality of any other component of the composition of the present invention. The use of salt water is only possible where the risk of corrosion of steel elements is low. It is especially preferred within the present context to use water extracted from the underground operation, for example water pumped out from a mining operation. Preferably, the water extracted from underground operations is filtered before use to remove tailings.

In one preferred embodiment, the weight ratio of water to binder component is higher than 1, preferably 2 to 30, more preferably 3 to 25.

The invention also relates to a method for backfilling, comprising pumping or gravity delivered backfill material according to any of the preferred embodiments, filling the backfill material in excavations in underground operations or surface operations and allowing the backfill slurry to set.

A method is preferred wherein the tailings are derived from the underground operations or from tailings ponds.

The invention preferably relates to a method for backfilling, wherein the tailings are derived from the crushing and mineral processing of the ore.

### Examples

The invention will further be described by a way of illustrative examples, which are however not to be construed as limiting in any way to the scope of the present application.

### Unconfined Compressive Strength (UCS)

The UCS was measured on a Zwick Roell Allround Line Z150 with a Xforce K 150kN force cell. Prior to a UCS test, the sizes of a sample are rectified to obtain valid press surfaces.

### Yield Point

The yield point of the fresh backfill material was measured using a constant shear rate method (at 0.5 RPM) using a HAAKE viscotester iQ rheometer and measuring geometry with VANE (FL100).

Three calcined clays with varying surface area were used for backfill testing:
Calcined Clay A is a blended kaolinitic/smectic clay, with high specific surface (47 m²/g) for the calcined clay;
Calcined Clay B is a kaolinitic clay, with low specific surface (4 m²/g) for the calcined clay;
Calcined Clay C is a kaolinitic clay, with medium specific surface (22 m²/g) for the calcined clay.

Specific surface may be determined according to ISO 9277:2010.

### Sample preparation

The mix design of the tested backfill materials is summarized in table 1. Four different binder components were tested and the compositions of the different binder components are summarized in table 2. For each binder component, three different dispersants were tested separately. An overview of the dispersants is given in table 3. For each binder component, a reference experiment without the addition of a dispersant was performed.

The backfill material was prepared by mixing the dispersant with the mixing water. The dry solids in form of the tailings from a Cu mines and the binder component were mixed with the prepared water-dispersant-mixture. The backfill material was casted using an IKA mixer (mixing time 30s, 30s rest, then 1 minute) in 20 mm x 20 mm x 20 mm cubes. The backfill samples were stored in a climate chamber at a temperature of 30° C and a relative humidity of 80%.

**Table 1 - General Backfill material mix**

| **Backfill material mix** | Tailings | Binder component | Water including the dispersant | Total |
|---|---|---|---|---|
| **Amount in g** | 300 | 15.79 | 89.07 | 404.89 |

The design of the different binder components that were tested is summarized in table 2.

**Table 2 - Composition of the tested binder components**

| | **Amount in wt.-%** | | | |
|---|---|---|---|---|
| **Component** | **Experiment 1** | **Experiment 2** | **Experiment 3** | **Experiment 4** |
| Clinker | 65 | 35 | 80 | 70 |
| Calcined clay (Type) | 15 (A) | 40 (B) | 20 (C) | 10 (C) |
| Limestone | 15 | 20 | / | / |
| Gypsum | 5 | 5 | / | / |
| Slag (GGBFS) | / | / | / | 20 |

The dispersants are comprising low, mid and high charge densities, as seen in table 3.

**Table 3 - Overview of the used dispersants**

| | PCE I^{∗} | PCE II^{∗∗} | PCE III^{∗∗} |
|---|---|---|---|
| Charge density [meq/g] | 1.1 | 0.8 | 1.8 |

| | | | |
|---|---|---|---|
| ^{∗} PCE I is a copolymer of acrylic acid and isoprenyloxy polyethylene glycol ether ^{∗∗}PCE II and PCE II are copolymers of acrylic acid and vinyloxybutylpolyethylenglycol | | | |

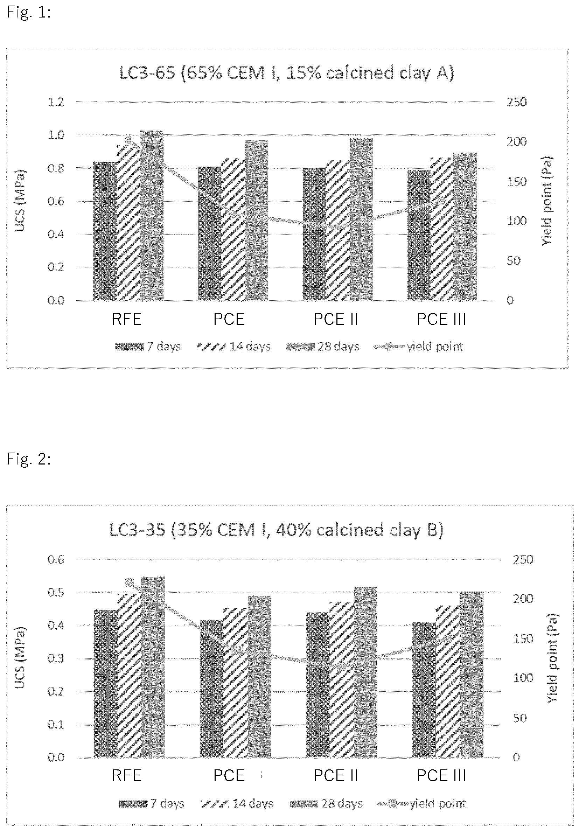

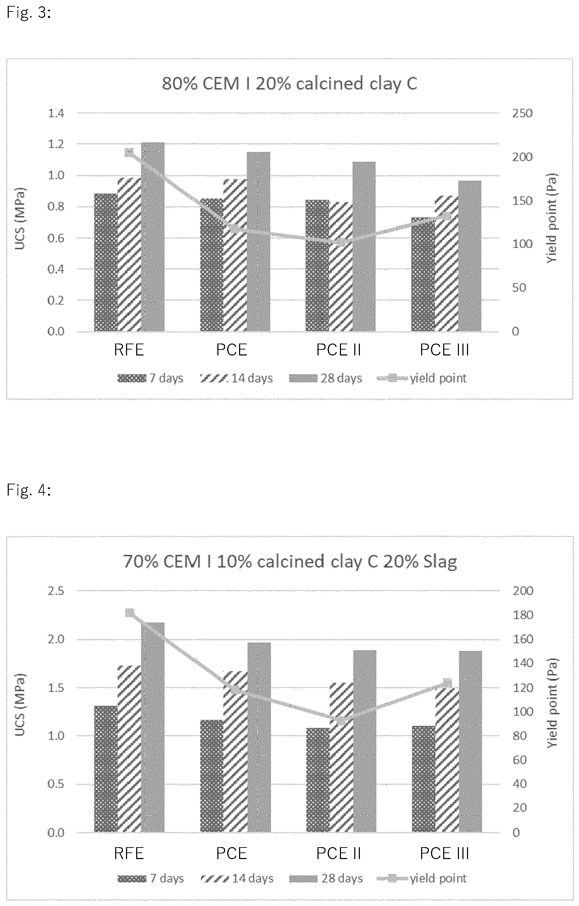

The results of the experiments are shown in figure 1-4. The compressive strength was determined after 7 days, 14 days and 28 days.

In all experiments, a lower yield point is observed for all tested dispersants compared to the reference. In other words, with the addition of a dispersant, a clear improvement on the yield point is observed compared to the reference. For PCE II the lowest yield point was observed for all tested binder components.

The compressive strength obtained for the different dispersants was comparable to the compressive strength obtained for the reference. As a high compressive strength is desirable, the results demonstrate clearly that it is possible to improve the yield point of a backfill material by the addition of a dispersant while obtaining a favorable compressive strength.

## Claims

1. A backfill material comprising
a. tailings,
b. a binder component,
c. water,
d. and at least one dispersant selected from polycarboxylate ethers and polycarboxylic acids,
wherein the binder component comprises a Portland cement clinker-based binder and calcined clay.

2. The backfill material according to claim 1, wherein the binder component additionally comprises at least one of carbonate rock powder and a sulfate source.

3. The backfill material according to claim 2, wherein the carbonate rock powder is limestone and the sulfate source is selected from gypsum, hemihydrate, anhydrite and mixtures thereof.

4. The backfill material according to any of the preceding claims, wherein the binder component additionally comprises a supplementary cementitious material, preferably a supplementary cementitious material selected from slag, fly ash and natural pozzolans.

5. The backfill material according to any of the preceding claims, wherein the weight ratio of the binder component to the tailings is from 1 to 20 preferably 1.5 to 15 more preferably 2 to 10.

6. The backfill material according to any of the preceding claims, wherein the Portland cement clinker is present in an amount of at least 5 wt.-%, preferably in an amount of 10 wt.-% to 90 wt.-%, more preferably in an amount of 15 wt.-% to 65 wt.-%, relative to the weight of the binder component.

7. The backfill material according to any of the preceding claims, wherein calcined clay is present in an amount of at least 5 wt.-%, preferably in an amount of at 10 wt.-% to 80 wt.-%, more preferably in an amount of 15 wt.-% to 60 wt.-%, relative to the weight of the binder component.

8. The backfill material according to any of the preceding claims, wherein the weight ratio of water to binder component is higher than 1, preferably 2 to 30, more preferably 3 to 25.

9. The backfill material according to any of the preceding claims, wherein the at least one dispersant is present in an amount of 0.05 wt.-% to 15 wt.-%, preferably in an amount of 0.1 wt.-% to 10 wt.-%, relative to the weight of a) and b).

10. The backfill material according to any of the preceding claims, wherein the polycarboxylate ether dispersant has a charge density of at least 0.1 meq/g, preferably 0.5 to 8 meq/g.

11. The backfill material according to any of the preceding claims, which has a yield point of 1000 Pa or lower, as measured by constant shear rate method (at 0.5 RPM) using a HAAKE viscotester iQ rheometer and measuring geometry with VANE (FL100).

12. A method for backfilling, comprising pumping or gravity delivered backfill material according to any of the preceding claims, filling the backfill material in excavations in underground operations or surface operations and allowing the backfill slurry to set.

13. A method for backfilling according to claim 14, wherein the tailings are derived from underground operations or from surface ponds.

14. A method for backfilling according to claim 14 or 15 wherein the tailings are derived from the crushing and mineral processing of the ore.
